# EUROPÄISCHE PATENTSCHRIFT

(11) **EP 2 695 268 B1**
(45) Veröffentlichungstag und Bekanntmachung des Hinweises auf die Patenterteilung: **18.03.2015**
(21) Anmeldenummer: 12731294.0
(22) Anmeldetag: 02.04.2012
(51) Int. Cl.: H02H 9/06, H01T 1/14, H01H 85/44, H01H 79/00, H01T 4/12, H02H 3/08, H01H 85/30, H01H 85/46

(54) **ÜBERSPANNUNGSSCHUTZEINRICHTUNG**
SURGE PROTECTION DEVICE
DISPOSITIF DE PROTECTION CONTRE LES SURTENSIONS

(30) Priorität: 01.04.2011 DE 102011001734
(43) Veröffentlichungstag der Anmeldung: 12.02.2014
(73) Patentinhaber: PHOENIX CONTACT GmbH & Co. KG, 32825 Blomberg (DE)
(72) Erfinder: DURTH, Rainer, 32805 Horn-Bad Meinberg (DE); DEPPING, Christian, 32657 Lemgo (DE)
(74) Vertreter: Michalski Hüttermann & Partner Patentanwälte mbB
(86) Internationale Anmeldenummer: PCT/EP2012/001455
(87) Internationale Veröffentlichungsnummer: WO 2012/130477

(56) Entgegenhaltungen:
- WO-A1-2008/069870
- DE-A1-102007 015 364
- US-A- 3 755 715

## Beschreibung

Die Erfindung betrifft eine Überspannungsschutzeinrichtung.

Überspannungsschutzeinrichtungen (Surge Protective Device - SPD) insbesondere für den Class I - Bereich werden typischerweise an sehr leistungsstarken Versorgungsnetzen betrieben. Diese Überspannungsvorrichtungen (SPD) leiten im Überspannungsfall den Strom an den zu schützenden Einrichtungen ab, d.h. ein Ableiter wird aktiviert.

Den Überspannungsschutzeinrichtungen vorgeschaltet sind Vorsicherungen, z.B. Niederspannungs-Hochleistungssicherungen der Bauart NH01 bis NH03.

Die vorgeschaltete Sicherungen sind entweder im Stichzweig zum Ableiter hin installiert, sichern also nur den Ableiter selbst oder es handelt sich um die vorgeschaltete Sicherungen des Gesamtsystems an dem die Überspannungsschutzeinrichtung betrieben wird.

### Stand der Technik

Überspannungsschutzeinrichtungen beinhalten häufig mehrere parallele Strompfade.

Dabei handelt es sich zumeist um mindestens einen Hauptableitstrompfad und einen oder mehrere Neben- oder Hilfsstrompfade.

Die Hauptableitstrompfade sollen die Überspannungen und Stoßstromimpulse leiten und sind daher stabil, d.h. mit großen Querschnitten ausgelegt.

Die Nebenstrompfade, die z.B. zur Signalisierung oder zur Versorgung von Einrichtungen zur Verbesserung des Zündverhaltens von SPDs (insbesondere Funkenstrecken, Triggern von Funkenstrecken und dergleichen) und/oder zur Signalsierung und/oder Messung genutzt werden, sind in aller Regel mit wesentlich geringeren Leiterquerschnitten ausgeführt. Auch die versorgten Einrichtungen sind in aller Regel nicht kurzschlussfest.

Diese Querschnitte sind daher häufig nicht kurzschlussfest bzw. überlastfest im Sinne der vorgeschalteten Sicherungen. Daher sind diese Strompfade über gesonderte Sicherungen abzusichern.

Wegen des in der Regel begrenzten Bauraumes innerhalb von Überspannungsschutzeinrichtungen werden Sicherungen kleiner Baugröße gewählt (z.B. Feinsicherungen).

Diese Sicherungen im Nebenstrompfad haben allerdings nicht das gleiche Löschvermögen wie die dem Überspannungsschutzeinrichtung vorgeschalteten Sicherungen. Daher sind Sicherungen im Nebenstrompfad von Zerstörung bedroht. Werden diese Sicherungen im Nebenpfad zerstört, so ist entweder die gesamte Überspannungsschutzeinrichtung oder zumindest die Sicherungen im Nebenpfad zu ersetzen. Dies ist zum einen aufwändig, zum anderen aber auch material- und zeitintensiv.

Überspannungsschutzeinrichtungen aus dem Stand der Technik sind aus folgenden Dokumente bekannt: DE102007015364A, WO2008/069870 oder US3755715.

Der Erfindung liegt die Aufgabe zu Grunde, eine Überspannungsschutzeinrichtung bereitzustellen, die im Nebenstrompfad eine Absicherung mit ausreichendem Löschvermögen bietet und zudem eine kleine Baugröße der Absicherung im Nebenstrompfad aufweist.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Nachfolgend wird die Erfindung unter Bezugnahme auf die anliegende Zeichnung anhand bevorzugter Ausführungsformen näher erläutert.

Es zeigen
- Fig. 1: eine schematische Übersicht von Ausführungsformen gemäß der Erfindung,
- Fig. 2: eine weitere schematische Übersicht von Ausführungsformen gemäß der Erfindung,
- Fig. 3: eine weitere schematische Übersicht von Ausführungsformen gemäß der Erfindung,
- Fig. 4: eine Detailansicht einer Ausführungsform gemäß der Erfindung,
- Fig. 5: eine weitere Detailansicht einer Ausführungsform gemäß der Erfindung,
- Fig. 6: eine weitere Detailansicht einer Ausführungsform gemäß der Erfindung, und
- Fig. 7: noch eine weitere Detailansicht einer Ausführungsform gemäß der Erfindung.

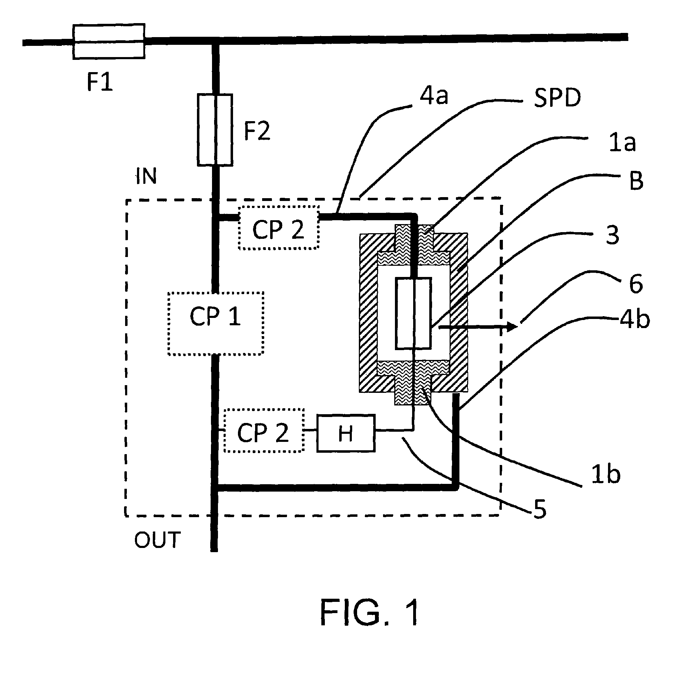

Die Figuren 1, 2 und 3 zeigen schematische Ausführungsformen gemäß der Erfindung. Diese werden nachfolgend beschrieben werden, wobei gleiche, gleichartige oder gleichwirkende Bauteile in der Regel mit gleichen Bezugszeichen referenziert werden.

Diese Ausführungsformen einer Überspannungsschutzeinrichtung SPD finden z.B. Anwendung in hoch kurzschlussfeste Feinsicherungsanordnung, insbesondere zur Absicherung von Zündkreisen an Funkenstrecken.

Nachfolgend wird auf Basis dieser mögliche Anwendung die Erfindung näher erläutert. Es versteht sich jedoch, dass diese Beschreibung nicht limitierend aufzufassen ist.

Die Überspannungsschutzeinrichtung SPD ist zwischen den Versorgungsleitungen einer Anlage oder eines elektrischen Gerätes angeordnet. Insofern werden eine Eingangsseite und eine Ausgangsseite definiert, wobei die Eingangsseite auf der dem Versorgungsnetz zugewandten Seite und die Ausgangsseite auf der der Anlage bzw. dem elektrischen Gerät zugewandten Seite angeordnet ist.

Eine vorgeschaltete Sicherung F2 kann dann im Stichzweig zur Überspannungsschutzeinrichtung SPD hin installiert sein.

Diese vorgeschaltete Sicherung F2 sichert die Überspannungsschutzeinrichtung SPD selbst ab.

Alternativ oder zusätzlich zur vorgeschalteten Sicherung F2 kann auch eine vorgeschaltete Sicherung F1 vorgesehen sein, welche zwischen der Eingangsseite und dem Stichzweig zur Überspannungsschutzeinrichtung SPD und damit auch zwischen der Ausgangsseite angeordnet ist. Insofern wird durch die vorgeschaltete Sicherung F1 des Gesamtsystems, an dem die Überspannungsschutzeinrichtung betrieben wird, geschützt.

Die vorgeschalteten Sicherungen F1 und / oder F2 können auch Bestandteil der Überspannungsschutzeinrichtung SPD sein und dort fest oder auswechselbar angeordnet sein.

Die Überspannungsschutzeinrichtungen SPD weist einen Eingang IN und einen Ausgang OUT auf.

Zwischen dem Eingang IN und dem Ausgang OUT können ein Hauptstrompfad oder mehrere Hauptstrompfade CP1 angeordnet sein. Nachfolgend wird lediglich ein Hauptstrompfad CP1 dargestellt werden ohne jedoch hierauf beschränkt zu sein.

Weiterhin können zwischen dem Eingang IN und dem Ausgang OUT ein Nebenstrompfad oder mehrere Nebenstrompfade CP2 angeordnet sein. Nachfolgend wird lediglich ein Nebenstrompfad CP2 dargestellt werden ohne jedoch hierauf beschränkt zu sein.

Im Nebenstrompfad CP2 ist ein Hilfssystem H angeordnet.

Dieses Hilfssystem ist beispielsweise dazu vorgesehen eine Signalisierung und/oder Fernwirkung und/oder Messung bereitzustellen und/oder ist zur Versorgung z.B. zur Verbesserung des Zündverhaltens einer Funkenstrecke, Triggern von Funkenstrecken und dergleichen, geeignet ausgerüstet.

Beispielsweise kann eine Funkenstrecke im Hauptstrompfad CP1 angeordnet sein und diese durch ein Hilfssystem im Nebenstrompfad gezündet oder eine Zündung getriggert werden.

Weiterhin weist die Überspannungsschutzeinrichtung SPD eine Sicherung 3,7 in einer kurzschlussfesten Sicherungsaufnahme B auf.

Die Sicherung weist in der Regel ein vergleichsweise geringes Schaltvermögen auf.

Die Sicherungsaufnahme B stellt ein kleines, kurzschlussfestes Bauvolumen zur Verfügung.

Die Sicherungsaufnahme B ist in einem Nebenpfad CP2 neben einem Hauptstrompfad CP1 einer Überspannungsschutzeinrichtung SPD angeordnet.

Die Sicherungsaufnahme B weist zwei voneinander isolierte Potentiale auf.

Dabei ist die Zuleitung 4a bis zumindest zu einen der beiden Potentiale der Sicherungsaufnahme B kurzschlussfest ausgeführt im Sinne der Kurzschlussfestigkeit der vorgeschalteten Sicherungen F1 und/oder F2.

Die Sicherung 3,7 kann im Wesentlichen ein vergleichsweise geringes Schaltvermögen aufweisen.

Diese Sicherung 3,7 ist auf der einen Seite, innerhalb der Sicherungsaufnahme B an dem einen kurzschlussfesten Potential des Bauvolumens kontaktiert.

Der andere Pol der Sicherung 3,7 ist isoliert 1b aus der Sicherungsaufnahme B herausgeführt und ist mit einem oder mehreren der Hilfsstrompfade 5 und damit mit dem Hilfssystem H kontaktiert. Der Hilfsstrompfad 5 ist nicht kurzschlussfest im Sinne der Kurzschlussfestigkeit einer vorgeschalteten Sicherungen F1 und/oder F2 ausgeführt.

Die Sicherung 3,7 kann dabei lediglich so dimensioniert sein, dass die nachfolgenden Hilfsstrompfade 5 abgesichert sind, so dass der Hilfsstrompfad 5 kurzschlussfest bzw. überlastfest im Sinne der vorgeschalteten Sicherung 3,7 sind.

Beispielsweise kann die Sicherung 3 eine Feinsicherung sein.

Weiterhin ist die kurzschlussfeste Sicherungsaufnahme B mit einem kurzschlussfesten Ableitpfad 4b kontaktiert, der am Hilfssystemstrompfad 5 vorbei einen Strom führen kann.

Diese Eigenschaft kann im Überlastfall der Sicherung 3,7 genutzt werden.

Wird im Überlastfall die Sicherung 3,7 ausgelöst bzw. zerstört, führt z.B. eine daraus resultierende Ionisierung von (zumindest) Teilen der Sicherung 3,7 bzw. des kurzschlussfesten Gehäuses B zu einem niederimpedanten Kurzschluss, beispielsweise einem Lichtbogen, zwischen der Zuleitung 4a und (der Innenwand) der kurzschlussfesten Sicherungsaufnahme B, so dass ein Kurzschlussstrom über den kurzschlussfesten Ableitpfad 4b am Hilfssystem H vorbei geführt wird.

Hierdurch wird erreicht, dass das Hilfssystem H und/oder die nicht kurzschlussfeste Verdrahtung 5 geschützt sind.

Das Löschvermögen der Sicherung 3,7 innerhalb der der Sicherungsaufnahme B kann zudem durch geeignete Maßnahmen unterschiedlich eingestellt werden.

Beispielhaft kann eine Sandfüllung vorgesehen sein, und/oder es kann ein Schmelzleiter vorgesehen sein, der geeignet ausgeformt ist. Weiterhin kann das Gehäuse geeignet ausgeformt bzw. aus bestimmtem Material hergestellt sein. Durch diese Ausgestaltungsvarianten die einzeln oder in Kombination zur Verfügung stehen kann das Löschvermögen geeignet beeinflusst werden.

Es ist jedoch auch möglich den Schmelzleiter 7 der Sicherung 3 ohne weitere Maßnahmen in der Sicherungsaufnahme B anzuordnen.

Bei Überlastung der Hilfsstrompfade löst die Sicherung 3,7 aus. Dabei wird der Überstrom durch die Sicherung 3,7 entsprechend dem eingestellten Löschvermögen selbsttätig gelöscht.

Reicht das Eigenlöschvermögen der Sicherung 3,7 nicht aus bzw. ist kein eigenes Löschvermögen vorgesehen, so wird die Sicherung 3,7 durch den Energieeintrag irreversible zerstört.

In diesem Fall wird ein Kurzschluss in der Sicherungsaufnahme B herbeigeführt, so dass der Strom über den Strompfad 4a auf den Strompfad 4b geleitet wird. Dieser Fall wird auch als Kurzschlussschaltfall bezeichnet.

Der dann fließende Strom ist in aller Regel hoch und führt zu einem sicheren Auslösen der der Überspannungsschutzeinrichtung SPD vorgeschalteten Sicherungen F1 und/oder F2.

Der innerhalb der Sicherungsaufnahme B erzeugte Kurzschluss kann verschiedenartig bewirkt werden.

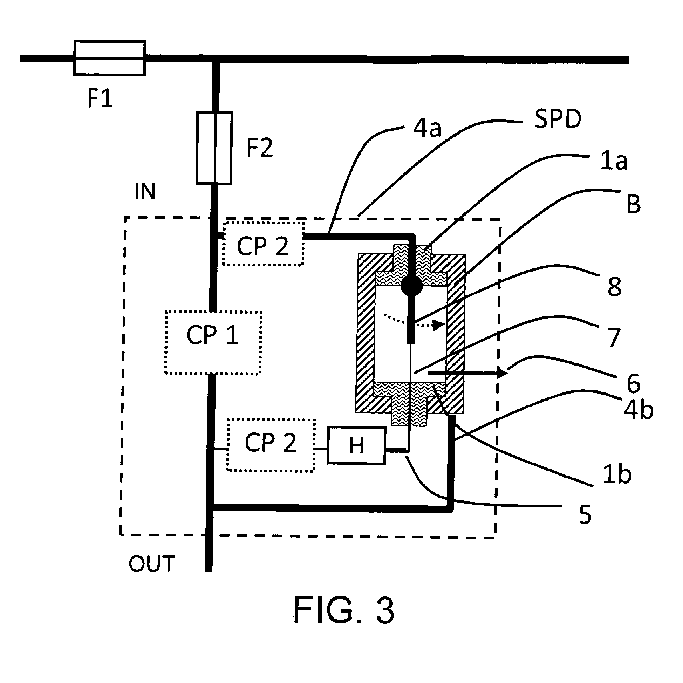

So ist es beispielsweise möglich wie in Figur 3 dargestellt eine mechanische Anordnung vorzusehen, welche beim Auslösen einen Kurzschluss zur Sicherungsaufnahme B herstellt.

Dies kann z.B. durch eine Kombination eines Kurzschlussschalters 8 mit einem Schmelzleiter 7 geschehen. Dabei sind der Schmelzleiter 7 und der Kurzschlussschalter 8 derart angeordnet, dass in einer ersten vorgespannten Position (wie in Figur 3 dargestellt) der Kontakt zum Nebenstrompfad 5 zur Verfügung gestellt wird.

Steigt der Strom an und überschreitet eine gewisse Schwelle schmilzt der Schmelzleiter 7, wobei der Schmelzleiter 7 dann den mechanischen, vorgespannten Kurzschlussschalter 8 freigibt, der nun durch die zuvor vorhandene Vorspannung in eine zweite Position bewegt wird und einen Kurzschluss mit der Sicherungsaufnahme B und dem Ableitpfad 4b herstellt.

Weiterhin kann der Kurzschluss auch durch einen Lichtbogen erzeugt werden. Ein solcher Lichtbogen kann z.B. dadurch entstehen, dass bei Versagen der Sicherung 3,7 ein Lichtbogen durch ionisierte Gase entsteht Es kann auch vorgesehen sein, dass auf ein relevantes Eigenlöschvermögen der Sicherung 3,7 verzichtet wird, so dass es bei jedem Auslösen der Sicherung 3,7 zu einem Kurzschluss in der Sicherungsaufnahme B kommt.

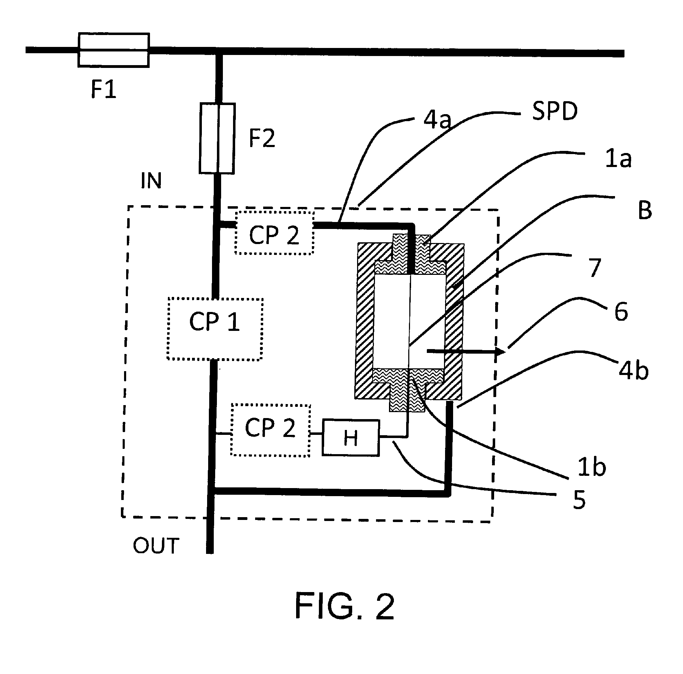

Hierzu kann der Schmelzleiter 7 der Sicherung nur isoliert an den Durchführungen (1a,1b), ohne weitere Umbauung - wie in Figur 2 dargestellt - in der Sicherungsaufnahme B angeordnet sein.

Weiterhin kann die Sicherungsaufnahme B aus verschiedenen metallischen oder nicht metallischen elektrisch leitfähigen Materialien bestehen und verschiedene mechanische Ausgestaltungen aufweisen.

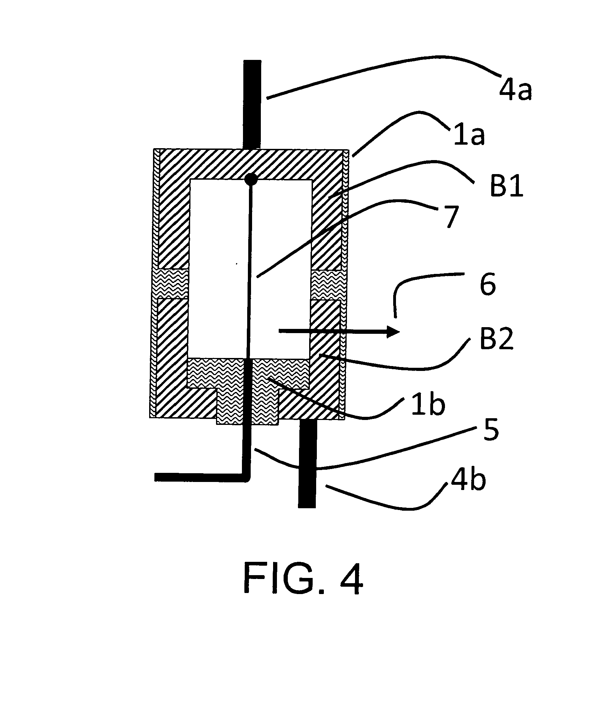

Wie in Figur 4 dargestellt können die beiden voneinander isolierten Potentiale z.B. als zwei Halbschalen einer Sicherungsaufnahme B realisiert sein.

Die Halbschalen B1, B2 sind leitfähig, z.B. metallisch, ausgeführt und durch eine Isolierung 1a voneinander getrennt.

Die obere Halbschale B1 ist mit dem Ableitpfad 4a verbindbar.

Die untere Halbschale B2 weist eine Isolierung 1b auf. Durch diese Isolierung 1b hindurch ist ein Schmelzleiter 7 oder eine Sicherung 3 mit einem Nebenstrompfad 5 verbindbar.

Weiterhin ist die untere Halbschale B2 auch mit dem Ableitpfad 4b verbindbar.

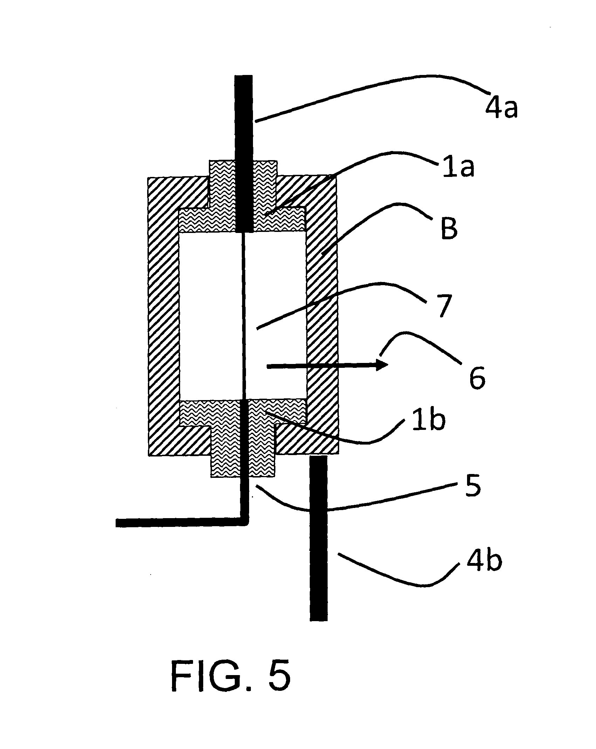

Wie in Figur 5 dargestellt kann das Gehäuse der Sicherungsaufnahme B selbst das eine Potential bilden.

Dargestellt ist der Fall, dass das Gehäuse der Sicherungsaufnahme B leitfähig, z.B. metallisch, ausgeführt ist.

Das Gehäuse der Sicherungsaufnahme B ist mit dem Ableitpfad 4b verbindbar.

In dem Gehäuse sind zwei isolierende Einsätze 1a, 1b im Wesentlichen gegenüberliegend angeordnet.

Durch die Isolierung 1a auf der Oberseite hindurch ist ein Schmelzleiter 7 oder eine Sicherung 3 mit einem Ableitpfad 4a verbindbar.

Durch die Isolierung 1b auf der Unterseite hindurch ist der Schmelzleiter 7 oder die Sicherung 3 mit einem Nebenstrompfad 5 verbindbar.

Dabei bildet der elektrische Kontakt, der durch die Isolierung 1a auf der Oberseite geführte ist, das andere Potential.

Um ein besonders hohes Schaltvermögen durch Lichtbögen zu erzeugen kann es vorteilhaft sein die gesamte Sicherungsaufnahme B oder abschnittsweise mit lichtbogenresistenten Materialien z.B. Kupfer-Wolfram auszubilden.

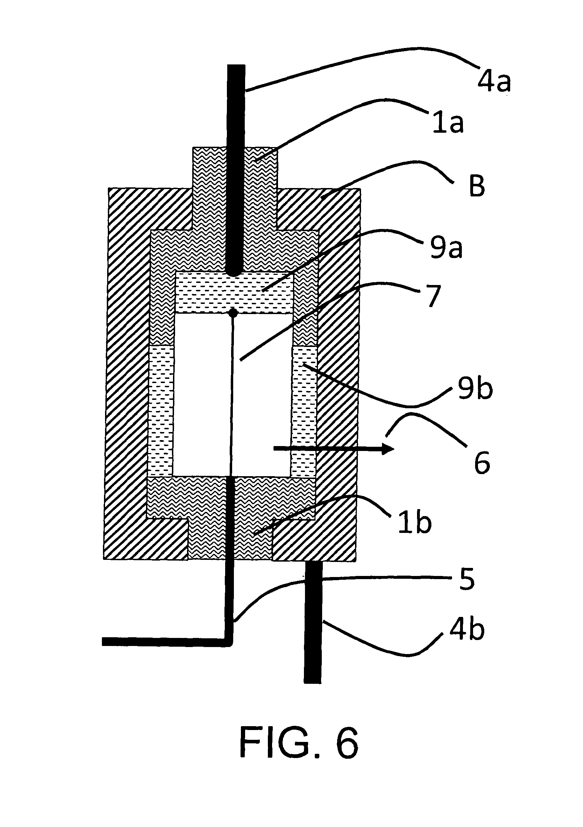

Diese Möglichkeit ist in Figur 6 dargestellt. Dort ist im Inneren der Sicherungsaufnahme B an verschiedenen Stellen lichtbogenresistentes Material angeordnet.

So ist es beispielsweise möglich an der Umwandung der Sicherungsaufnahme B lichtbogenresistentes Material 9b anzuordnen. Alternativ oder zusätzlich ist es möglich an einer der Isolierungen, dargestellt an der Isolierung 1a, B lichtbogenresistentes Material 9a anzuordnen.

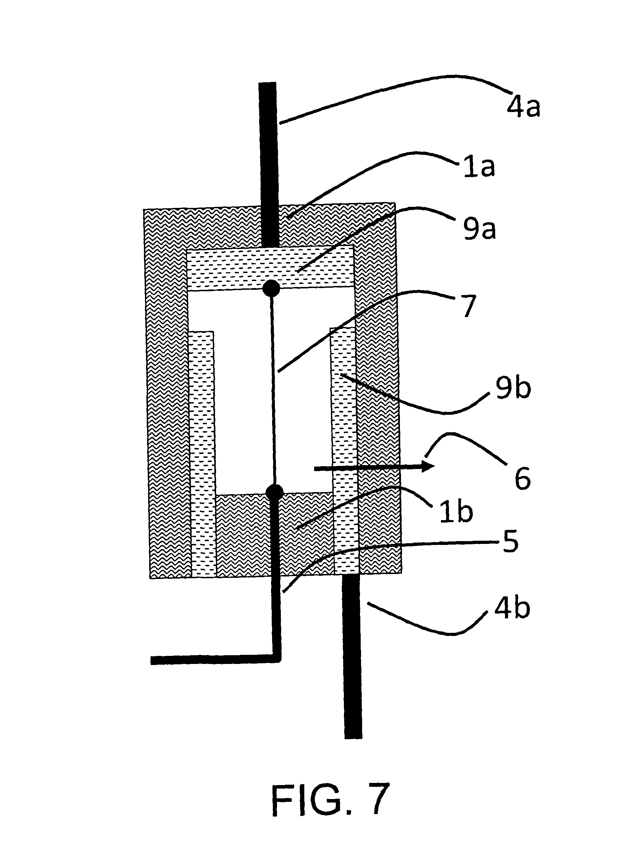

Weiterhin kann bei geeigneter Ausgestaltung wie in Figur 7 gezeigt, die Sicherungsaufnahme B im Wesentlichen aus einem isolierenden Material 1a gebildet sein.

In diesem ist eine Kontaktierung zum Innenbereich für den Ableiter 4a vorgesehen. Weiterhin ist in einem isolierenden Abschnitt 1b eine Kontaktierung zum Innenbereich für den Hilfsstromleiter 5 vorgesehen. Zwischen den beiden Kontaktierungen ist eine Sicherung 3,7 einbringbar.

Weithin kann als Bestandteil der Sicherungsaufnahme B oder der Sicherung 3,7 ein elektrisch leitender Abschnitt 9b angeordnet sein, der eine Kontaktierung zum Innenbereich für den Ableiter 4b zur Verfügung stellt.

Wenn besondere Bereiche für das Brennen des Lichtbogens vorgesehen werden, kann das Gehäuse das die mechanische Festigkeit erzeugt auch aus einem Isolierstoff sein der vorzugsweise gleichzeitig die isolierten Durchführungen bildet.

Bevorzugt ist die Überspannungseinrichtung SPD so ausgeführt, dass die Sicherung 3,7 und die Sicherungsaufnahme B als eine Baueinheit ausgeführt sind, wobei die Baueinheit in der Überspannungseinrichtung SPD auswechselbar angeordnet ist.

Weiterhin ist bevorzugt, dass die Überspannungseinrichtung SPD über eine Signalisierungseinrichtung 6 verfügt, welche den Zustand der Sicherung (3) elektrisch und/oder optisch und/oder akustisch signalisiert.

Diese Signalisierungseinrichtung 6 kann alternativ oder zusätzlich zu einer in einem Nebenstrompfad CP2 angeordneten Signalisierungseinrichtung vorgesehen sein.

Weiterhin ist bevorzugt, dass die Überspannungseinrichtung SPD so ausgelegt ist, dass die Kurzschlussfestigkeit der Überspanungseinrichtung für Klasse I Betrieb erfüllt ist.

**Bezugszeichenliste**

| | |
|---|---|
| Überspannungsschutzeinrichtung | SPD |
| Eingang | IN |
| Ausgang | OUT |
| Hauptstrompfad | CP1 |
| Nebenstrompfad | CP2 |
| Hilfssystem | H |
| Sicherungsaufnahme | B, B1, B2 |
| Isolierung, isolierendes Material | 1a, 1b |
| Sicherung | 3 |
| Ableitpfad | 4a,4b |
| Vorsicherung | F1, F2 |
| Hilfssystemstrompfad | 5 |
| Signalisierungseinrichtung | 6 |
| Schmelzleiter | 7 |
| Kurzschlussschalter | 8 |
| lichtbogenresistentes Material | 9a, 9b |

## Patentansprüche

1. Überspannungsschutzeinrichtung (SPD) aufweisend
• einen Eingang (IN) und einen Ausgang (OUT),
• wobei die Überspannungsschutzeinrichtung (SPD) zwischen dem Eingang (IN) und dem Ausgang (OUT) einen kurzschlussfesten Hauptstrompfad (CP1) und einen Nebenstrompfad (CP2) aufweist,
• wobei im Nebenstrompfad (CP2) ein Hilfssystem (H) zur Signalisierung und/oder Versorgung von Einrichtungen zur Verbesserung des Zündverhaltens angeordnet ist, wobei
• die Überspannungsschutzeinrichtung (SPD) weiterhin eine Sicherung (3, 7) in einer kurzschlussfesten Sicherungsaufnahme (B) aufweist,
• wobei die kurzschlussfeste Sicherungsaufnahme (B) im Nebenstrompfad (CP2) angeordnet ist und die kurzschlussfeste Sicherungsaufnahme (B) auf einer Seite des Nebenstrompfades (CP2,4a) kurzschlussfest bezogen auf den Hauptstrompfad (CP1) mit dem Hauptstrompfad (CP1) kontaktiert ist, und die kurzschlussfeste Sicherungsaufnahme (B) auf der anderen Seite des Nebenstrompfades (CP2,5) im Wesentlichen kurzschlussfest bezogen auf die Sicherung (3,7) kontaktiert ist, und
• die kurzschlussfeste Sicherungsaufnahme (B) weiterhin mit einem kurzschlussfesten Ableitpfad (4b) kontaktiert ist, womit am Hilfssystemstrompfad (5) vorbei ein Strom geführt werden kann.

2. Überspannungsschutzeinrichtung (SPD) gemäß Anspruch 1, **dadurch gekennzeichnet, dass** im Kurzschlussschaltfall der Sicherung (3, 7) der Strom über den Nebenstrompfad (CP2, 4a) auf den kurzschlussfesten Ableitpfad (4b) geleitet wird uns somit am Hilfssystem (H) vorbei geführt wird.

3. Überspannungsschutzeinrichtung (SPD) gemäß Anspruch 1 oder 2, **dadurch gekennzeichnet, dass** die Sicherung (3, 7) einen Schmelzleiter (7) aufweist.

4. Überspannungseinrichtung (SPD) gemäß einem der vorhergehenden Ansprüche, **dadurch gekennzeichnet, dass** der Ableitpfad (4b) durch ein mechanisches Schalten (8) durch die Sicherung (3, 7) in der Sicherungsaufnahme (B) aktiviert wird.

5. Überspannungseinrichtung (SPD) gemäß einem der vorhergehenden Ansprüche 1 bis 3, **dadurch gekennzeichnet, dass** der Kurzschluss zum Ableitpfad (4b) durch einen Lichtbogen durch das Auslösen der Sicherung (3) in der Sicherungsaufnahme (B) aktiviert wird.

6. Überspannungseinrichtung (SPD) gemäß einem der vorhergehenden Ansprüche, **dadurch gekennzeichnet, dass** die Sicherungsaufnahme (B) abschnittsweise metallisch ausgeführt ist.

7. Überspannungseinrichtung (SPD) gemäß einem der vorhergehenden Ansprüche, **dadurch gekennzeichnet, dass** die Sicherungsaufnahme (B) zumindest abschnittsweise ein lichtbogenresistentes Material (9a, 9b)aufweist.

8. Überspannungseinrichtung (SPD) gemäß einem der vorhergehenden Ansprüche, **dadurch gekennzeichnet, dass** die Sicherungsaufnahme (B) zumindest abschnittsweise ein isolierendes Material (1a, 1b) aufweist.

9. Überspannungseinrichtung (SPD) gemäß einem der vorhergehenden Ansprüche, **dadurch gekennzeichnet, dass** die Sicherung (3, 7) ein eigenes Löschvermögen besitzt.

10. Überspannungsschutzeinrichtung (SPD) gemäß Anspruch 10, **dadurch gekennzeichnet, dass** die Sicherung (3, 7) eine Sandfüllung aufweist.

11. Überspannungseinrichtung (SPD) gemäß einem der vorhergehenden Ansprüche, **dadurch gekennzeichnet, dass** die Sicherung (3) und die Sicherungsaufnahme (B) als eine Baueinheit ausgeführt ist, welche in der Überspannungseinrichtung (SPD) auswechselbar angeordnet ist.

12. Überspannungseinrichtung (SPD) gemäß einem der vorhergehenden Ansprüche, **dadurch gekennzeichnet, dass** die Überspannungseinrichtung (SPD) weiterhin über eine Signalisierungseinrichtung (6) verfügt, welche den Zustand der Sicherung (3) elektrisch und/oder optisch und/oder akustisch signalisiert.

13. Überspannungseinrichtung (SPD) gemäß einem der vorhergehenden Ansprüche, **dadurch gekennzeichnet, dass** die Kurzschlussfestigkeit der Überspanungseinrichtung für Klasse I Betrieb ausgelegt ist.

## Claims

1. A surge protection device (SPD) comprising
• an input (IN) and an output (OUT),
• wherein the surge protection device (SPD) has, between the input (I) and the output (OUT), a short-circuit-proof primary current path (CP1) and a secondary current path (CP2),
• wherein an auxiliary system (H) for signalling and/or supplying devices for improving the ignition behaviour is arranged in the secondary current path (CP2),
wherein
• the surge protection device (SPD) also has a fuse (3, 7) in a short-circuit-proof fuse box (B),
• wherein the short-circuit-proof fuse box (B) is arranged in the secondary current path (CP2) and on one side of the secondary current path (CP2, 4a) the short-circuit-proof fuse box (B) is contacted with the primary current path (CP1) in a short-circuit-proof manner based on the primary current path (CP1), and on the other side of the secondary current path (CP2, 5) the short-circuit-proof fuse box (B) is contacted substantially in a short-circuit-proof manner based on the fuse (3, 7), and
• the short-circuit-proof fuse box (B) is also contacted with a short-circuit-proof discharge path (4b), whereby a current can be guided past the auxiliary system current path (5).

2. The surge protection device (SPD) according to Claim 1, **characterised in that**, in the event that the fuse (3, 7) is shorted, the current is conducted via the secondary current path (CP2, 4a) to the short-circuit-proof discharge path (4b) and is thus guided past the auxiliary system (H).

3. The surge protection device (SPD) according to Claim 1 or 2, **characterised in that** the fuse (3, 7) has a fuse element (7).

4. The surge protection device (SPD) according to one of the preceding claims, **characterised in that** the discharge path (4b) is activated by a mechanical switch (8) by the fuse (3, 7) in the fuse box (B).

5. The surge protection device (SPD) according to one of preceding Claims 1 to 3, **characterised in that** the short circuit to the discharge path (4b) is activated by an arc by the triggering of the fuse (3) in the fuse box (B).

6. The surge protection device (SPD) according to one of the preceding claims, **characterised in that** the fuse box (B) is metal in portions.

7. The surge protection device (SPD) according to one of the preceding claims, **characterised in that** the fuse box (B) comprises an arc-resistant material (9a, 9b) at least in portions.

8. The surge protection device (SPD) according to one of the preceding claims, **characterised in that** the fuse box (B) comprises an insulating material (1a, 1b) at least in portions.

9. The surge protection device (SPD) according to one of the preceding claims, **characterised in that** the fuse (3, 7) has it's own quenching capacity.

10. The surge protection device (SPD) according to Claim 10, **characterised in that** the fuse (3, 7) comprises a sand filling.

11. The surge protection device (SPD) according to one of the preceding claims, **characterised in that** the fuse (3) and the fuse box (B) is formed as a module that is arranged exchangeably in the surge protection device (SPD).

12. The surge protection device (SPD) according to one of the preceding claims, **characterised in that** the surge protection device (SPD) also has a signalling device (6) that electrically and/or optically and/or acoustically signals the state of the fuse (3).

13. The surge protection device (SPD) according to one of the preceding claims, **characterised in that** the short-circuit strength of the surge protection device is designed for class I operation.

## Revendications

1. Dispositif de protection contre les surtensions (SPD) comportant
• une entrée (IN) et une sortie (OUT),
• dans lequel le dispositif de protection contre les surtensions (SPD) comporte un trajet de courant principal (CP1) résistant aux courts-circuits et un trajet de courant auxiliaire (CP2) entre l'entrée (IN) et la sortie (OUT),
• dans lequel un système d'appoint (H) est agencé dans le trajet de courant auxiliaire (CP2), pour la signalisation et/ou l'alimentation de dispositifs pour l'amélioration du comportement d'allumage, dans lequel
• le dispositif de protection contre les surtensions (SPD) comporte en outre un fusible (3, 7) dans une admission de fusible (B) résistant aux courts-circuits,
• dans lequel l'admission de fusible (B) résistant aux courts-circuits est agencée dans le trajet de courant auxiliaire (CP2), et l'admission de fusible (B) résistant aux courts-circuits est mise en contact, d'un côté du trajet de courant auxiliaire (CP2, 4a), avec le trajet de courant principal (CP1) tout en résistant aux courts-circuits par rapport au trajet de courant auxiliaire (CP2), et l'admission de fusible (B) résistant aux courts-circuits est mise en contact en étant essentiellement protégée contre les courts-circuits par rapport au fusible (3, 7) de l'autre côté du trajet de courant auxiliaire (CP2, 5), et
• l'admission de fusible (B) résistant aux courts-circuits est en outre mise en contact avec un trajet de déviation (4b) résistant aux courts-circuits, moyennant quoi un courant peut passer devant le trajet de courant du système d'appoint (5).

2. Dispositif de protection contre les surtensions (SPD) selon la revendication 1, **caractérisé en ce qu'**en cas de court-circuit du fusible (3, 7), le courant est guidé sur le trajet de déviation (4b) résistant aux courts-circuits, par le biais du trajet de courant auxiliaire (CP2, 4a), et passe ainsi devant le système d'appoint (H).

3. Dispositif de protection contre les surtensions (SPD) selon la revendication 1 ou 2, **caractérisé en ce que** le fusible (3, 7) comporte un conducteur fusible (7).

4. Dispositif de protection contre les surtensions (SPD) selon l'une des revendications précédentes, **caractérisé en ce que** le trajet de déviation (4b) est activé par une activation mécanique (8) par le fusible (3, 7) dans l'admission de fusible (B).

5. Dispositif de protection contre les surtensions (SPD) selon l'une des revendications précédentes 1 à 3, **caractérisé en ce que** le court-circuit par rapport au trajet de déviation (4b) est activé par un arc électrique par déclenchement du fusible (3) dans l'admission de fusible (B).

6. Dispositif de protection contre les surtensions (SPD) selon l'une des revendications précédentes, **caractérisé en ce que** l'admission de fusible (B) est conçue métallique par sections.

7. Dispositif de protection contre les surtensions (SPD) selon l'une des revendications précédentes, **caractérisé en ce que** l'admission de fusible (B) comporte au moins par sections un matériau résistant aux arcs électriques (9a, 9b).

8. Dispositif de protection contre les surtensions (SPD) selon l'une des revendications précédentes, **caractérisé en ce que** l'admission de fusible (B) comporte au moins par sections un matériau isolant (1a, 1b).

9. Dispositif de protection contre les surtensions (SPD) selon l'une des revendications précédentes, **caractérisé en ce que** le fusible (3, 7) présente une capacité d'extinction propre.

10. Dispositif de protection contre les surtensions (SPD) selon la revendication 10, **caractérisé en ce que** le fusible (3, 7) présente un remplissage de sable.

11. Dispositif de protection contre les surtensions (SPD) selon l'une des revendications précédentes, **caractérisé en ce que** le fusible (3) et l'admission de fusible (B) sont conçus comme un seul bloc agencé de façon remplaçable dans le dispositif de protection contre les surtensions (SPD).

12. Dispositif de protection contre les surtensions (SPD) selon l'une des revendications précédentes, **caractérisé en ce que** le dispositif de protection contre les surtensions (SPD) dispose en outre d'un dispositif de signalisation (6) signalant l'état du fusible (3) de façon électrique et/ou optique et/ou acoustique.

13. Dispositif de protection contre les surtensions (SPD) selon l'une des revendications précédentes, **caractérisé en ce que** la résistance aux courts-circuits du dispositif de protection contre les surtensions est conçue pour un fonctionnement de classe 1.
